# EUROPÄISCHE PATENTSCHRIFT

(11) **EP 3 454 442 B1**
(45) Veröffentlichungstag und Bekanntmachung des Hinweises auf die Patenterteilung: **28.10.2020**
(21) Anmeldenummer: 18192436.6
(22) Anmeldetag: 04.09.2018
(51) Int. Cl.: H02G 11/02, H02G 3/03

(54) **KABELTROMMEL ZUR ENERGIEVERSORGUNG EINES ELEKTRISCH BETRIEBENEN NUTZFAHRZEUGS**
CABLE REEL FOR ENERGY SUPPLY OF AN ELECTRIC OPERATED COMMERCIAL VEHICLE
ENROULEUR DE CÂBLE DESTINÉ À L'ALIMENTATION EN ÉNERGIE D'UN VÉHICULE UTILITAIRE À COMMANDE ÉLECTRIQUE

(30) Priorität: 07.09.2017 DE 102017215822
(43) Veröffentlichungstag der Anmeldung: 13.03.2019
(73) Patentinhaber: Deere & Company, Moline, IL 61265 (US)
(72) Erfinder: Daubermann, Julian, 68163 Mannheim (DE); Kegel, Volker, 68163 Mannheim (DE); Lehmann, Philipp, 68163 Mannheim (DE); Pfaffmann, Simon, 68163 Mannheim (DE); Tarasinski, Nicolai, 68163 Mannheim (DE)
(74) Vertreter: Dehnhardt, Florian Christopher

(56) Entgegenhaltungen:
- DE-A1- 2 628 812
- DE-C- 850 130
- JP-A- S62 260 512
- US-A1- 2017 151 879

## Beschreibung

Die Erfindung betrifft eine Kabeltrommel zur Energieversorgung eines elektrisch betriebenen Nutzfahrzeugs, mit einem axial verlaufenden Wickelkörper, der sich mittels eines Wickelantriebs zum Auf- oder Abspulen einer elektrischen Leitung in Drehung versetzen lässt.

Eine derartige Kabeltrommel mit einem motorisch angetriebenen Wickelzylinder geht beispielsweise aus der DE 10 2014 020 448 A1 hervor, wobei der Wickelzylinder eine Vielzahl von Luftdurchtrittsöffnungen zur Beaufschlagung eines darauf aufgewickelten elektrischen Kabels mit einem kühlenden Luftstrom aufweist. Nachteilig ist, dass der Durchtritt des Luftstroms zwischen den einzelnen Kabelwindungen mit zunehmender Anzahl aufeinanderliegender Wickellagen mehr und mehr behindert wird.

Andere Dokumente, welche die Kühlung aufgewickelter elektrischer Leitungen offenbaren, sind DE 850 130, US 2017/151879, DE 26 28 812 und JP S62 260512.

Es ist daher Aufgabe der vorliegenden Erfindung, eine Kabeltrommel der eingangs genannten Art bezüglich ihrer Kühlleistung zu verbessern.

Diese Aufgabe wird durch eine Kabeltrommel zur Energieversorgung eines elektrisch betriebenen Nutzfahrzeugs mit den Merkmalen des Patentanspruchs 1 gelöst.

Die Kabeltrommel zur Energieversorgung eines elektrisch betriebenen Nutzfahrzeugs umfasst einen axial verlaufenden Wickelkörper, der sich mittels eines Wickelantriebs zum Auf- oder Abspulen einer elektrischen Leitung in Drehung versetzen lässt.

Des Weiteren sind Abstandsmittel zur Segmentierung einer auf den Wickelkörper aufgespulten Wickellage derart vorgesehen, dass zwischen benachbarten Segmenten der Wickellage ein Durchtrittsbereich freigehalten wird, durch den mittels einer Luftfördereinrichtung erzeugte Kühlluft aus dem Inneren des Wickelkörpers nach außen strömt. Zusätzlich passt die Luftfördereinrichtung den Kühlluftstrom in Abhängigkeit von Informationen hinsichtlich der Betriebstemperatur der auf dem Wickelkörper befindlichen elektrischen Leitung an. Insofern erfolgt eine Drehzahlregelung seitens einer Kontrolleinheit, wozu diese eine Abschätzung des tatsächlichen Kühl- bzw. Volumenstrombedarfs vornimmt. Die Abschätzung des tatsächlichen Kühl- bzw. Volumenstrombedarfs erfolgt durch die Kontrolleinheit modellbasiert nach Maßgabe elektrischer und thermischer Eigenschaften der verwendeten elektrischen Leitung, wie des spezifischen Leitungswiderstands, des Wärmekoeffizienten oder dergleichen, sowie ferner des Bewicklungszustands der Kabeltrommel und der über die elektrische Leitung übertragenen elektrischen Leistung, wobei von der Kontrolleinheit zusätzlich die mittels eines Temperatursensors erfasste Umgebungstemperatur einbezogen wird.

Auf diese Weise ist sichergestellt, dass die an den Durchtrittsbereich unmittelbar angrenzenden Leitungswindungen ungeachtet der Anzahl aufeinanderliegender Wickellagen gleichmäßig mit Kühlluft umströmt werden. Jedes der Segmente umfasst pro Wickellage typischerweise 1 bis 6 Leitungswindungen, sodass der Abstand zu den dem Kühlluftstrom ausgesetzten äußeren Leitungswindungen jeweils höchstens ½ bis 3 Leitungsbreiten beträgt. Auch bei einer Vielzahl aufeinanderliegender Wickellagen ist in diesem Fall eine ausreichende Wärmeabfuhr aus dem Inneren der in den Segmenten befindlichen Wicklungspakete gegeben.

Ein Einsatz der erfindungsgemäßen Kabeltrommel bietet sich aufgrund der zu erwartenden hohen Leistungsdichten insbesondere im Zusammenhang mit elektrisch betriebenen Nutzfahrzeugen an. Die Kabeltrommel kann zum Beispiel Bestandteil eines autonom fahrenden landwirtschaftlichen Traktors sein, dessen Fahr- bzw. Arbeitsaggregate mittels im Mittelspannungsbereich arbeitender Elektromotoren angetrieben werden. Die Kabeltrommel bzw. der Wickelkörper kann derart dimensioniert sein, dass sich darauf eine elektrische Leitung mit einer Länge von mehreren Kilometern unterbringen lässt. Die elektrische Leitung kann hierbei neben Adern zur Stromversorgung auch solche zur elektrischen und/oder optischen Datenübertragung umfassen.

Weitere vorteilhafte Ausgestaltungen der erfindungsgemäßen Kabeltrommel gehen aus den Unteransprüchen hervor.

Vorzugsweise handelt es sich bei den Abstandsmitteln um am Wickelkörper radial abragende Abstandsstäbe. Die insbesondere aus Stahl oder hochfestem Kunststoff bestehenden Abstandsstäbe können axial gleichmäßig voneinander beabstandet und in Reihen entlang des axialen Verlaufs des Wickelkörpers angeordnet sein. Abweichend davon kann jedoch auch eine zueinander versetzte Anordnung vorgesehen sein, die dem Verlauf bzw. der Steigung der Leitungswindungen um den Wickelkörper herum Rechnung trägt und ein gegenüber den Abstandsstäben kollisionsfreies Auf- und Abspulen der elektrischen Leitung beim Drehen des Wickelkörpers begünstigt.

In jedem der Durchtrittsbereiche können mehrere Abstandsstäbe entlang eines Außenumfangs des Wickelkörpers gleichmäßig verteilt angeordnet sein. Der Durchmesser der Abstandsstäbe definiert hierbei die Breite des für den Kühlluftstrom am Wickelkörper freigehaltenen Durchtrittsbereichs. Letzterer weist insbesondere die Gestalt eines umlaufenden Ringspalts auf, wozu die Abstandsstäbe jeweils in einer gemeinsamen Schnittebene des Wickelkörpers liegen.

Ferner besteht die Möglichkeit, dass in jedem der Durchtrittsbereiche eine gerade Anzahl von Abstandsstäben vorgesehen ist, wobei die Abstandsstäbe zur Erhöhung der Stabilität jeweils in einem Endbereich in Paaren radial miteinander verbunden sein können. Jedes der Paare weist in diesem Fall einen u- bzw. v-förmigen Verlauf der Abstandsstäbe zueinander auf.

Um die Möglichkeit einer Beschädigung der elektrischen Leitung beim Auf- und Abrollen zu verringern, können die Abstandsstäbe zudem radial nachgiebig, insbesondere federelastisch am Wickelkörper angebracht sein. In diesem Fall kann es sich bei diesen um aus Federstahl bestehende Biegeteile handeln, die jeweils im Bereich einer dem Wickelkörper zugeordneten Anbringungsstelle als Torsionsfeder ausgestaltet sind. Alternativ weisen die Abstandsstäbe flexible Materialeigenschaften auf, wozu diese aus federelastischem Stahl bzw. Kunststoff bestehen.

Zum Schutz der elektrischen Leitung können die Abstandsstäbe zusätzlich abgerundete Kanten aufweisen, auch ist es denkbar, diese mit einer aus Kunststoff bestehenden reibungsmindernden Beschichtung zu versehen, sodass ein verbessertes Vorbeigleiten der einzelnen Leitungswindungen entlang der Abstandsstäbe beim Auf- und Abrollen innerhalb des jeweiligen Segments gewährleistet ist.

Auch kann die elektrische Leitung beim Auf- und Abspulen mittels einer Kabelführung in einer vorgegebenen Einfallrichtung gegenüber dem Wickelkörper geführt werden, wobei die Abstandsstäbe einen mit der vorgegebenen Einfallrichtung korrespondierenden Neigungswinkel gegenüber dem Wickelkörper aufweisen. Hierdurch lässt sich sicherstellen, dass die Abstandsstäbe den Bereich der elektrischen Leitung beim Drehen des Wickelkörpers im Wesentlichen zueinander parallel verlaufend passieren. Ein unerwünschtes Kreuzen bzw. Kollidieren der elektrischen Leitung mit den Abstandsstäben beim Drehen des Wickelkörpers kann auf diese Weise weitgehend vermieden werden. Zusätzlich ist auch ein spiralförmig gebogener Verlauf der Abstandsstäbe denkbar, der dem Umstand Rechnung trägt, dass sich mit zunehmender Anzahl aufeinanderliegender Wickellagen die Einfallrichtung des elektrischen Kabels ändert.

Der Wickelkörper kann an seinen axialen Stirnseiten erste und zweite Trommelflansche aufweisen, wobei in wenigstens einem der beiden Trommelflansche eine mit der Luftfördereinrichtung kommunizierende Luftzufuhröffnung ausgebildet ist. Die Luftfördereinrichtung kann unmittelbar an die Luftzuführöffnung angrenzen und mittels entsprechender Befestigungselemente am betreffenden Trommelflansch angebracht sein. Bei der Luftfördereinrichtung handelt es sich im einfachsten Fall um ein elektrisch angetriebenes Lüftergebläse, beispielsweise einen Radiallüfter.

Der Wickelkörper an sich kann entweder durch ein Trommelskelett oder einen geschlossenen Trommelkörper mit in den Durchtrittsbereichen vorgesehenen Luftaustrittsöffnungen gebildet sein. Im Falle der Verwendung eines Trommelskeletts schränken die innerhalb der Segmente aneinanderliegenden Leitungswindungen der Wickellage den Kühlluftstrom auf die mittels der Abstandsstäbe freigehaltenen Durchtrittsbereiche ein, sodass der innerhalb des Wickelkörpers mittels der Luftfördereinrichtung aufgebaute Staudruck im Wesentlichen nur über diese nach außen entweichen kann. Das Trommelskelett besteht üblicherweise aus einer Vielzahl von entlang eines gedachten Trommelumfangs parallel zueinander angeordneten Axialstreben, die mittels mehrerer quer verlaufender Radialringe versteift sind. Demgegenüber weist der geschlossene Trommelkörper eine aus Stahlblech bestehende trommelförmige Wandung auf, in der die Luftaustrittsöffnungen in Gestalt entsprechender Durchbrüche eingebracht sind.

Des Weiteren kann die Kabeltrommel eine mittels einer Stelleinrichtung axial verschiebbare Kabelführung zum Auf- und
Abspulen der elektrischen Leitung umfassen, wobei die Kontrolleinheit den Wickelantrieb in Verbindung mit der Stelleinrichtung derart ansteuert, dass durch Abstimmung der Drehung des Wickelkörpers mit der axialen Verschiebung der Kabelführung die elektrische Leitung orthozyklisch auf den Wickelkörper aufgespult wird. Zu diesem Zweck kann dem Wickelkörper ein Drehgeber sowie der verschiebbaren Kabelführung ein Positionssensor zugeordnet sein, wobei die insofern bereitgestellten Sensorinformationen der Kontrolleinheit zur Auswertung und entsprechenden Ansteuerung des Wickelantriebs sowie der Stelleinrichtung zugeführt werden. Die Stelleinrichtung umfasst insbesondere einen innerhalb einer Führungsschiene gelagerten Seitenführungsschlitten, an dem die eigentliche Kabelführung befestigt ist, wobei sich der Seitenführungsschlitten mittels eines elektrischen Spindelantriebs innerhalb der Führungsschiene hin und her bewegen lässt. Hierbei kann das orthozyklische Wickelschema beim Auf- bzw. Abspulen der elektrischen Leitung einen orthogonalen, also quer zur Wickelrichtung orientierten Sprung um eine ganze bzw. halbe Leitungsbreite vorsehen, und zwar jeweils bei Vollendung einer vollen bzw. halben Umdrehung des Wickelkörpers. Der orthogonale Sprung erlaubt hierbei einen Wechsel zwischen benachbarten Segmenten ohne mögliche Kollisionen mit den betreffenden Abstandsstäben.

Die Einhaltung eines fest vorgegebenen Wickelschemas erlaubt es zudem, einen bestimmten Leitungsvorrat reproduzierbar auf der Kabeltrommel unterzubringen, da zu entsprechendem Raumbedarf führende Wicklungsfehler, wie beispielsweise ungeordnet übereinanderliegende Leitungswindungen und dergleichen, von vornherein vermieden werden.

Die Kabelführung kann eine Sensoreinrichtung zur Erfassung einer seitlichen Abweichung der elektrischen Leitung von einer einzuhaltenden Wickelrichtung aufweisen, wobei die Kontrolleinheit bei Erkennung einer unzulässigen seitlichen Abweichung eine korrigierende Bewegung der Kabelführung durch Ansteuerung der Stelleinrichtung und/oder ein teilweises Rück-Abspulen der elektrischen Leitung durch Ansteuerung des elektrischen Wickelantriebs veranlasst, um eine Fehlwicklung zu beseitigen. Typischerweise liegt eine unzulässige Abweichung von der einzuhaltenden Wickelrichtung dann vor, wenn der seitliche Austrittswinkel der elektrischen Leitung am Seitenführungsschlitten um ein vorgegebenes Toleranzmaß von der Senkrechten gegenüber dem Wickelkörper abweicht. Zur Erfassung des seitlichen Austrittswinkels, also desjenigen Winkels, den die elektrische Leitung innerhalb der durch die Drehachse des Wickelkörpers aufgespannten Ebene einnimmt, kann die Sensoreinrichtung einen Laserscanner, eine Lichtschranke oder eine Kamera aufweisen, was eine berührungslose Abtastung der elektrischen Leitung, genauer gesagt des am Seitenführungsschlitten in Richtung des Wickelkörpers austretenden Leitungsabschnitts erlaubt. Abweichend davon ist auch eine Erfassung mittels eines mechanischen Winkelsensors möglich. Der Winkelsensor weist hierzu einen an der elektrischen Leitung anliegenden Taster zur Erfassung des Leitungsverlaufs auf.

Die erfindungsgemäße Kabeltrommel wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
- Fig. 1: ein Ausführungsbeispiel der erfindungsgemäßen Kabeltrommel in unbewickeltem Zustand,
- Fig. 2: das in Fig. 1 dargestellte Ausführungsbeispiel der erfindungsgemäßen Kabeltrommel in voll bewickeltem Zustand, und
- Fig. 3: eine beispielhafte Darstellung eines mit der erfindungsgemäßen Kabeltrommel gemäß Fig. 1 bzw. 2 ausgerüsteten elektrisch betriebenen landwirtschaftlichen Traktors.

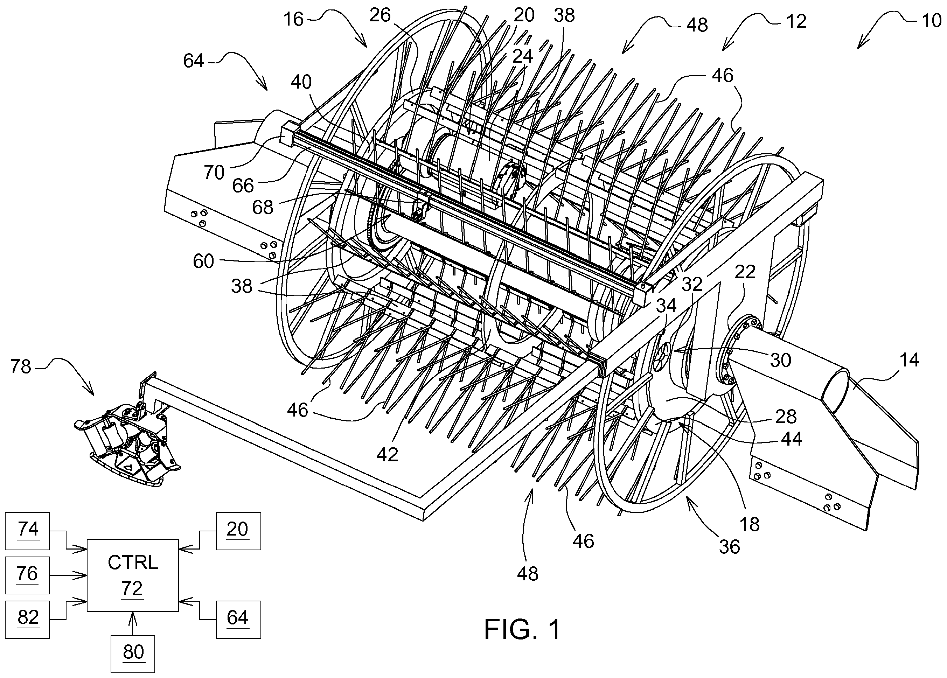

Fig. 1 zeigt ein Ausführungsbeispiel der erfindungsgemäßen Kabeltrommel in leerem Zustand.

Die Kabeltrommel 10 umfasst einen axial verlaufenden Wickelkörper 12, der innerhalb einer tragenden Rahmenstruktur 14 an seinen axialen Stirnseiten 16, 18 drehbar gelagert ist, sodass sich der Wickelkörper 12 zum Auf- und Abspulen einer in Fig. 1 nicht dargestellten elektrischen Leitung mittels eines zugehörigen Wickelantriebs 20 in Drehung versetzen lässt. Bei dem Wickelantrieb 20 handelt es sich im vorliegenden Fall um einen mit einer Drehachse 22 des Wickelkörpers 12 verbundenen elektrischen Getriebemotor 24.

Weiterhin weist der Wickelkörper 12 an seinen axialen Stirnseiten 16, 18 erste und zweite Trommelflansche 26, 28 auf, die endseitige Wickelbegrenzungen für die aufgespulte elektrische Leitung bilden, wobei in dem zweiten Trommelflansch 28 eine mit einer innenliegenden Luftfördereinrichtung 30 kommunizierende Luftzufuhröffnung 32 ausgebildet ist. Die Luftfördereinrichtung 30 grenzt unmittelbar an die Luftzuführöffnung 32 an und ist mittels entsprechender Befestigungselemente am zweiten Trommelflansch 28 angebracht. Bei der Luftfördereinrichtung 30 handelt es sich um ein elektrisch angetriebenes Lüftergebläse 34 in Gestalt eines Radiallüfters.

Der Wickelkörper 12 an sich ist beispielsgemäß durch ein Trommelskelett 36 gebildet. Das Trommelskelett 36 besteht aus einer Vielzahl von entlang eines gedachten Trommelumfangs parallel zueinander angeordneten Axialstreben 38, die mittels mehrerer quer verlaufender Radialringe 40, 42, 44 versteift sind. Die beiden äußeren Radialringe 40, 44 bilden hierbei gemeinsam mit dem jeweiligen Trommelflansch 26, 28 stirnseitige Begrenzungen des Wickelkörpers 12.

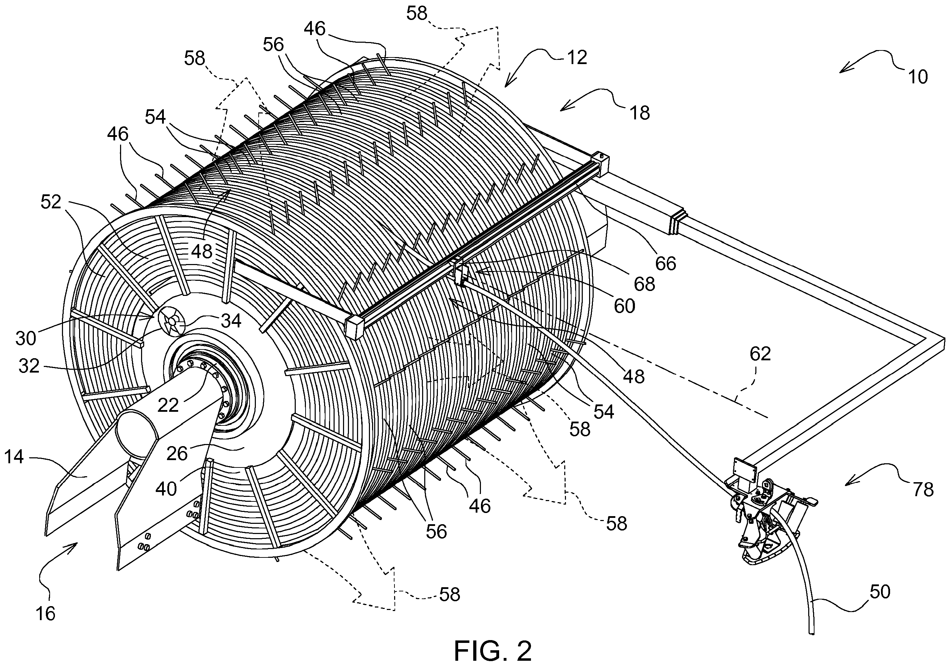

Ferner sind als Abstandsstäbe 46 ausgebildete Abstandsmittel 48 vorgesehen, die der Segmentierung einer auf den Wickelkörper 12 aufgespulten elektrischen Leitung 50 bzw. einer oder mehrerer von dieser gebildeten Wickellagen 52 dienen (siehe hierzu Fig. 2), wobei die Abstandsstäbe 46 radial am Wickelkörper 12 abragen. Die Abstandsstäbe 46 sind axial gleichmäßig voneinander beabstandet und in Reihen entlang des axialen Verlaufs des Wickelkörpers 12 angeordnet. Beispielsgemäß sind die Abstandsstäbe 46 an den Axialstreben 38 des Trommelskeletts 36 radial nachgiebig angebracht, wozu diese aus federelastischem Stahl bestehen.

Wie sich der Darstellung der Kabeltrommel 10 in Fig. 2 in voll bewickeltem Zustand entnehmen lässt, halten die Abstandsstäbe 46 jeweils einen Durchtrittsbereich 54 zwischen benachbarten Segmenten 56 der Wickellagen 52 frei, sodass mittels der Luftfördereinrichtung 30 erzeugte Kühlluft aus dem Inneren des Wickelkörpers 12 nach außen strömen kann. In jedem der Segmente 56 sind im vorliegenden Fall 5 Leitungswindungen untergebracht, sodass der Abstand zu den dem Kühlluftstrom 58 ausgesetzten äußeren Leitungswindungen jeweils höchstens 2 ½ Leitungsbreiten beträgt. Auch bei einer Vielzahl aufeinanderliegender Wickellagen 52 ist in diesem Fall eine ausreichende Wärmeabfuhr aus dem Inneren der in den Segmenten 56 befindlichen Wicklungspakete gegeben. Die Darstellung von 5 Leitungswindungen soll dabei lediglich beispielhaften Charakter haben, die Segmente 56 können ebenso gut auch eine andere Anzahl von Leitungswindungen umfassen, typischerweise im Bereich von 1 bis 6 Leitungswindungen pro Segment 56.

In jedem der Durchtrittsbereiche 54 sind insgesamt 10 Abstandsstäbe 46 entlang eines Außenumfangs des Wickelkörpers 12 gleichmäßig verteilt angeordnet. Der Durchmesser der Abstandsstäbe 46 definiert hierbei die Breite des für den Kühlluftstrom 58 am Wickelkörper 12 freigehaltenen Durchtrittsbereichs 54. Letzterer weist die Gestalt eines umlaufenden Ringspalts auf, wozu die Abstandsstäbe 46 jeweils in einer gemeinsamen Schnittebene des Wickelkörpers 12 liegen.

Genauer gesagt schränken die innerhalb der Segmente 56 aneinanderliegenden Leitungswindungen der Wickellage 52 den Kühlluftstrom 58 auf die mittels der Abstandsstäbe 46 freigehaltenen Durchtrittsbereiche 54 ein, sodass der innerhalb des Wickelkörpers 12 mittels der Luftfördereinrichtung 30 aufgebaute Staudruck im Wesentlichen nur über diese nach außen entweichen kann.

Ist der Wickelkörper 12 statt als Trommelskelett 36 als geschlossener Trommelkörper ausgebildet, so umfasst dieser in den Durchtrittsbereichen 54 vorgesehene Luftaustrittsöffnungen. Der geschlossene Trommelkörper weist in diesem Fall eine aus Stahlblech bestehende trommelförmige Wandung auf, in der die Luftaustrittsöffnungen in Gestalt entsprechender Durchbrüche eingebracht sind.

Zum Schutz der elektrischen Leitung 50 weisen die Abstandsstäbe 46 zusätzlich abgerundete Kanten auf, optional können diese auch mit einer aus Kunststoff bestehenden reibungsmindernden Beschichtung versehen sein, sodass ein verbessertes Vorbeigleiten der einzelnen Leitungswindungen entlang der Abstandsstäbe 46 beim Auf- und Abrollen innerhalb des jeweiligen Segments 56 gewährleistet ist.

Ist wie hier in jedem der Durchtrittsbereiche 54 eine gerade Anzahl von Abstandsstäben 46 vorgesehen, so können diese entsprechend einer nicht dargestellten Ausgestaltung der Kabeltrommel 10 jeweils in einem Endbereich in Paaren radial miteinander verbunden sein. Jedes der Paare weist in diesem Fall einen u- bzw. v-förmigen Verlauf der Abstandsstäbe 46 zueinander auf.

Die elektrische Leitung 50 wird beim Auf- und Abspulen mittels einer Kabelführung 60 in einer vorgegebenen Einfallrichtung 62 gegenüber dem Wickelkörper 12 geführt, wobei die Abstandsstäbe 46 einen mit der vorgegebenen Einfallrichtung 62 korrespondierenden Neigungswinkel gegenüber dem Wickelkörper 12 aufweisen. Hierdurch lässt sich sicherstellen, dass die Abstandsstäbe 46 den Bereich der elektrischen Leitung 50 beim Drehen des Wickelkörpers 12 im Wesentlichen zueinander parallel verlaufend passieren.

Die Kabelführung 60 lässt sich zum reproduzierbaren Auf- und Abspulen der elektrischen Leitung 50 mittels einer Stelleinrichtung 64 axial verschieben. Die Stelleinrichtung 64 umfasst einen innerhalb einer Führungsschiene 66 gelagerten Seitenführungsschlitten 68, an dem die eigentliche Kabelführung 60 befestigt ist, wobei sich der Seitenführungsschlitten 68 mittels eines elektrischen Spindelantriebs 70 innerhalb der Führungsschiene 66 hin und her bewegen lässt. Eine Kontrolleinheit 72 steuert den Wickelantrieb 20 in Verbindung mit der Stelleinrichtung 64 derart an, dass durch Abstimmung der Drehung des Wickelkörpers 12 mit der axialen Verschiebung der Kabelführung 60 die elektrische Leitung 50 orthozyklisch auf den Wickelkörper 12 aufgespult wird. Zu diesem Zweck ist dem Wickelkörper 12 ein (z.B. inkrementaler) Drehgeber 74 sowie der verschiebbaren Kabelführung 60 ein (z.B. linearer) Positionssensor 76 zugeordnet, wobei die insofern bereitgestellten Sensorinformationen der Kontrolleinheit 72 zur Auswertung und entsprechenden Ansteuerung des Wickelantriebs 20 sowie der Stelleinrichtung 64 zugeführt werden. Hierbei sieht das orthozyklische Wickelschema beim Auf- bzw. Abspulen der elektrischen Leitung 50 innerhalb der Segmente 56 einen orthogonalen, also quer zur Wickelrichtung orientierten Sprung um eine ganze bzw. halbe Leitungsbreite vor, und zwar jeweils bei Vollendung einer vollen bzw. halben Umdrehung des Wickelkörpers 12. Beim Wechsel zwischen den Segmenten 56 ist dieser entsprechend dem zu überwindenden Durchmesser der Abstandsstäbe 46 bemessen. Eine starr an der tragenden Rahmenstruktur 14 angebrachte weitere Kabelführung 78 dient hierbei der richtungsdefinierten Einspeisung der elektrischen Leitung 50 in den Seitenführungsschlitten 68.

Die Kabelführung 60 weist eine Sensoreinrichtung 80 zur Erfassung einer seitlichen Abweichung der elektrischen Leitung 50 von einer einzuhaltenden Wickelrichtung auf, wobei die Kontrolleinheit 72 bei Erkennung einer unzulässigen seitlichen Abweichung eine korrigierende Bewegung der Kabelführung 60 durch Ansteuerung der Stelleinrichtung 64 und/oder ein teilweises Rück-Abspulen der elektrischen Leitung 50 durch Ansteuerung des Wickelantriebs 20 veranlasst, um eine Fehlwicklung zu beseitigen. Eine unzulässige Abweichung von der einzuhaltenden Wickelrichtung liegt dann vor, wenn der seitliche Austrittswinkel der elektrischen Leitung 50 am Seitenführungsschlitten 68 um ein vorgegebenes Toleranzmaß von der Senkrechten gegenüber dem Wickelkörper 12 abweicht. Zur Erfassung des seitlichen Austrittswinkels, also desjenigen Winkels, den die elektrische Leitung 50 innerhalb der durch die Drehachse 22 des Wickelkörpers 12 aufgespannten Ebene einnimmt, weist die Sensoreinrichtung 80 einen Laserscanner, eine Lichtschranke oder eine Kamera auf, was eine berührungslose Abtastung der elektrischen Leitung 50, genauer gesagt des am Seitenführungsschlitten 68 in Richtung des Wickelkörpers 12 austretende Leitungsabschnitts erlaubt. Abweichend erfolgt eine Erfassung mittels eines mechanischen Winkelsensors, wozu dieser einen an der elektrischen Leitung 50 anliegenden Taster zur Erfassung des Leitungsverlaufs aufweist.

Zusätzlich passt die Luftfördereinrichtung 30 den Kühlluftstrom 58 in Abhängigkeit von Informationen hinsichtlich der Betriebstemperatur der auf dem Wickelkörper 12 befindlichen elektrischen Leitung 50 an. Insofern erfolgt eine Drehzahlregelung seitens der Kontrolleinheit 72, wozu diese eine Abschätzung des tatsächlichen Kühl- bzw. Volumenstrombedarfs vornimmt. Die Abschätzung des tatsächlichen Kühl- bzw. Volumenstrombedarfs erfolgt durch die Kontrolleinheit 72 modellbasiert nach Maßgabe elektrischer und thermischer Eigenschaften der verwendeten elektrischen Leitung 50, wie des spezifischen Leitungswiderstands, des Wärmekoeffizienten oder dergleichen, sowie ferner des aus Sensorinformationen des Drehgebers 74 gewonnenen Bewicklungszustands der Kabeltrommel 10, wobei von der Kontrolleinheit 72 zusätzlich die mittels eines Temperatursensors 82 erfasste Umgebungstemperatur einbezogen wird.

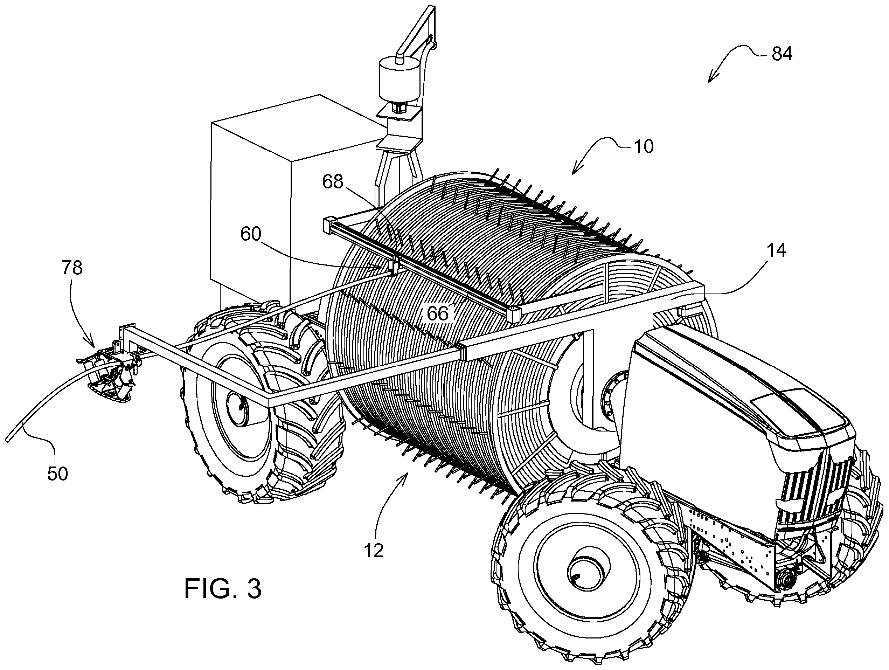

Ein Einsatz der Kabeltrommel 10 bietet sich aufgrund der zu erwartenden hohen Leistungsdichten insbesondere im Zusammenhang mit elektrisch betriebenen Nutzfahrzeugen an. Eine derartige Situation ist in Fig. 3 veranschaulicht, in der die Kabeltrommel 10 Bestandteil eines autonom fahrenden landwirtschaftlichen Traktors 84 ist, dessen Fahr- bzw. Arbeitsaggregate mittels im Mittelspannungsbereich arbeitender Elektromotoren angetrieben werden. Die Kabeltrommel 10 bzw. der Wickelkörper 12 ist derart dimensioniert, dass sich darauf eine elektrische Leitung 50 mit einer Länge von mehreren Kilometern unterbringen lässt. Die elektrische Leitung 50 umfasst hierbei neben Adern zur Stromversorgung auch solche zur elektrischen und/oder optischen Datenübertragung.

## Patentansprüche

1. Kabeltrommel zur Energieversorgung eines elektrisch betriebenen Nutzfahrzeugs, mit einem axial verlaufenden Wickelkörper (12), der sich mittels eines Wickelantriebs (20) zum Auf- oder Abspulen einer elektrischen Leitung (50) in Drehung versetzen lässt, und mit Abstandsmitteln (48) zur Segmentierung einer auf den Wickelkörper (12) aufgespulten Wickellage (52) derart, dass zwischen benachbarten Segmenten (56) der Wickellage (52) ein Durchtrittsbereich (54) freigehalten wird, durch den mittels einer Luftfördereinrichtung (30) erzeugte Kühlluft aus dem Inneren des Wickelkörpers (12) nach außen strömt, **dadurch gekennzeichnet, dass** eine Kontrolleinheit (72) den Kühlluftstrom durch Regelung der Drehzahl der Luftfördereinrichtung (30) auf Grundlage einer modellbasierten Abschätzung des tatsächlichen Kühl- bzw. Volumenstrombedarfs nach Maßgabe elektrischer und thermischer Eigenschaften der verwendeten elektrischen Leitung (50) sowie ferner des aus Sensorinformationen eines Drehgebers (74) gewonnenen Bewicklungszustands der Kabeltrommel (10) und der über die elektrische Leitung (50) übertragenen elektrischen Leistung anpasst, wobei die Kontrolleinheit (72) zusätzlich die mittels eines Temperatursensors (82) erfasste Umgebungstemperatur einbezieht.

2. Kabeltrommel nach Anspruch 1, **dadurch gekennzeichnet, dass** es sich bei den Abstandsmitteln (48) um am Wickelkörper (12) radial abragende Abstandsstäbe (46) handelt.

3. Kabeltrommel nach Anspruch 2, **dadurch gekennzeichnet, dass** in jedem der Durchtrittsbereiche (54) mehrere Abstandsstäbe (46) entlang eines Außenumfangs des Wickelkörpers (12) gleichmäßig verteilt angeordnet sind.

4. Kabeltrommel nach Anspruch 2 oder 3, **dadurch gekennzeichnet, dass** in jedem der Durchtrittsbereiche (54) eine gerade Anzahl von Abstandsstäben (46) vorgesehen ist, wobei die Abstandsstäbe (46) zur Erhöhung der Stabilität jeweils in einem Endbereich in Paaren radial miteinander verbunden sind.

5. Kabeltrommel nach Anspruch 2 oder 3, **dadurch gekennzeichnet, dass** die Abstandsstäbe (46) radial nachgiebig, insbesondere federelastisch am Wickelkörper (12) angebracht sind.

6. Kabeltrommel nach wenigstens einem der Ansprüche 2 bis 5, **dadurch gekennzeichnet, dass** die Abstandsstäbe (46) abgerundete Kanten aufweisen.

7. Kabeltrommel nach wenigstens einem der Ansprüche 2 bis 6, **dadurch gekennzeichnet, dass** die elektrische Leitung (50) beim Auf- und Abspulen mittels einer Kabelführung (60) in einer vorgegebenen Einfallrichtung (62) gegenüber dem Wickelkörper (12) geführt wird, wobei die Abstandsstäbe (46) einen mit der vorgegebenen Einfallrichtung (62) korrespondierenden Neigungswinkel gegenüber dem Wickelkörper (12) aufweisen.

8. Kabeltrommel nach wenigstens einem der Ansprüche 1 bis 7, **dadurch gekennzeichnet, dass** der Wickelkörper (12) an seinen axialen Stirnseiten (16, 18) erste und zweite Trommelflansche (26, 28) aufweist, wobei in wenigstens einem der beiden Trommelflansche (26, 28) eine mit der Luftfördereinrichtung (30) kommunizierende Luftzufuhröffnung (32) ausgebildet ist.

9. Kabeltrommel nach wenigstens einem der Ansprüche 1 bis 8, **dadurch gekennzeichnet, dass** der Wickelkörper (12) entweder durch ein Trommelskelett (36) oder einen geschlossenen Trommelkörper mit in den Durchtrittsbereichen (54) vorgesehenen Luftaustrittsöffnungen gebildet ist.

10. Kabeltrommel nach wenigstens einem der Ansprüche 1 bis 9, **dadurch gekennzeichnet, dass** die Kabeltrommel (12) eine mittels einer Stelleinrichtung (64) axial verschiebbare Kabelführung (60) zum Auf- und Abspulen der elektrischen Leitung (50) umfasst, wobei die Kontrolleinheit (72) den Wickelantrieb (20) in Verbindung mit der Stelleinrichtung (64) derart ansteuert, dass durch Abstimmung der Drehung des Wickelkörpers (12) mit der axialen Verschiebung der Kabelführung (60) die elektrische Leitung (50) orthozyklisch auf den Wickelkörper (12) aufgespult wird.

11. Kabeltrommel nach Anspruch 10, **dadurch gekennzeichnet, dass** die Kabelführung (60) eine Sensoreinrichtung (80) zur Erfassung einer seitlichen Abweichung der elektrischen Leitung (50) von einer einzuhaltenden Wickelrichtung aufweist, wobei die Kontrolleinheit (72) bei Erkennung einer unzulässigen seitlichen Abweichung der elektrischen Leitung (50) eine korrigierende Bewegung der Kabelführung (60) durch Ansteuerung der Stelleinrichtung (64) und/oder ein teilweises Rück-Abspulen der elektrischen Leitung (50) durch Ansteuerung des Wickelantriebs (20) veranlasst, um eine Fehlwicklung zu beseitigen.

## Claims

1. Cable drum for supplying energy to an electrically operated utility vehicle, having an axially extending winding body (12), which can be put into rotation by means of a winding drive (20) for the purpose of reeling-up or unreeling an electric line (50), and having spacing means (48) for segmenting a winding layer (52) reeled-up onto the winding body (12), in such a manner that a passage region (54), through which cooling air, generated by means of an air conveying means (30), flows outward, out of the interior of the winding body (12), is kept clear between adjacent segments (56) of the winding layer (52), **characterized in that** a control unit (72) adapts the cooling air flow by closed-loop control of the rotational speed of the air conveying means (30) on the basis of a model-based estimation of the actual cooling or volumetric flow requirement, according to electrical and thermal properties of the electric line (50) used and also according to the wound state of the cable drum (10), obtained from sensor information of the rotary position sensor (74) and the electric power carried by the electric line (50), the ambient temperature sensed by means of a temperature sensor (82) additionally being included by the control unit (72).

2. Cable drum according to Claim 1, **characterized in that** the spacing means (48) are spacing rods (46) projecting radially on the winding body (12).

3. Cable drum according to Claim 2, **characterized in that**, in each of the passage regions (54), a plurality of spacing rods (46) are arranged in an evenly distributed manner along an outer circumference of the winding body (12).

4. Cable drum according to Claim 2 or 3, **characterized in that** an even number of spacing rods (46) is provided in each of the passage regions (54), the spacing rods (46) being connected to each other radially in pairs, in an end region in each case, to increase the stability.

5. Cable drum according to Claim 2 or 3, **characterized in that** the spacing rods (46) are attached to the winding body (12) in a radially flexible, in particular elastic, manner.

6. Cable drum according to at least one of Claims 2 to 5, **characterized in that** the spacing rods (46) have rounded edges.

7. Cable drum according to at least one of Claims 2 to 6, **characterized in that**, during reeling-up and unreeling, the electric line (50) is guided, by means of a cable guide (60), in a predefined direction of incidence (62) relative to the winding body (12), the spacing rods (46) having an angle of inclination, relative to the winding body (12), that corresponds to the predefined direction of incidence (62).

8. Cable drum according to at least one of Claims 1 to 7, **characterized in that** the winding body (12) has first and second drum flanges (26, 28) at its axial end faces (16, 18), an air supply opening (32), which communicates with the air conveying means (30), being realized in at least one of the two drum flanges (26, 28).

9. Cable drum according to at least one of Claims 1 to 8, **characterized in that** the winding body (12) is formed either by a drum skeleton (36) or a closed drum body having air outlet openings provided in the passage regions (54).

10. Cable drum according to at least one of Claims 1 to 9, **characterized in that** the cable drum (12) comprises a cable guide (60), which is axially displaceable by means of a positioning means (64), for reeling-up and unreeling the electric line (50), the control unit (72) controlling the winding drive (20) in combination with the positioning means (64) in such a manner that, by coordination of the rotation of the winding body (12) with the axial displacement of the cable guide (60), the electric line (50) is reeled-up orthocyclically onto the winding body (12).

11. Cable drum according to Claim 10, **characterized in that** the cable guide (60) has a sensor means (80) for sensing a lateral deviation of the electric line (50) from a winding direction to be maintained, the control unit (72), upon identification of an inadmissible lateral deviation of the electric line (50), initiating a correcting movement of the cable guide (60) by controlling the positioning means (64) and/or partially reeling back the electric line (50) by controlling the winding drive (20) in order to remedy a mis-winding.

## Revendications

1. Enrouleur de câble destiné à l'alimentation en énergie d'un véhicule utilitaire électrique, comprenant un corps d'enroulement (12) s'étendant axialement qui peut être mis en rotation au moyen d'un entraînement d'enroulement (20) pour enrouler ou dérouler un câble électrique (50), et comprenant des moyens d'espacement (48) pour segmenter une couche d'enroulement (52) enroulée sur le corps d'enroulement (12) de telle sorte qu'entre des segments voisins (56) de la couche d'enroulement (52) est dégagée une zone de passage (54) à travers laquelle de l'air de refroidissement produit au moyen d'un dispositif de transport d'air (30) circule de l'intérieur du corps d'enroulement (12) vers l'extérieur, **caractérisé en ce qu'**une unité de contrôle (72) adapte le courant d'air de refroidissement par une régulation de la vitesse de rotation du dispositif de transport d'air (30) sur la base d'une estimation, basée sur un modèle, de la demande réelle de refroidissement ou de débit volumétrique selon la spécification de propriétés électriques et thermiques du câble électrique (50) utilisé ainsi que de l'état d'enroulement de l'enrouleur de câble (10), obtenu à partir d'informations de capteur d'un résolveur (74), et de la puissance électrique transmise par le câble électrique (50), dans lequel l'unité de contrôle (72) incorpore de plus la température ambiante détectée au moyen d'un capteur de température (82).

2. Enrouleur de câble selon la revendication 1, **caractérisé en ce que** les moyens d'espacement (48) sont des barres d'espacement (46) faisant saillie radialement du corps d'enroulement (12).

3. Enrouleur de câble selon la revendication 2, **caractérisé en ce que** dans chacune des zones de passage (54), plusieurs barres d'espacement (46) sont disposées le long d'une circonférence extérieure du corps d'enroulement (12) en étant réparties régulièrement.

4. Enrouleur de câble selon la revendication 2 ou 3, **caractérisé en ce qu'**un nombre pair de barres d'espacement (46) est prévu dans chacune des zones de passage (54), les barres d'espacement (46) étant radialement reliées ensemble par paires respectivement dans une zone d'extrémité pour augmenter la stabilité.

5. Enrouleur de câble selon la revendication 2 ou 3, **caractérisé en ce que** les barres d'espacement (46) sont attachées au corps d'enroulement (12) de manière radialement flexible, en particulier de manière élastique.

6. Enrouleur de câble selon au moins l'une des revendications 2 à 5, **caractérisé en ce que** les barres d'espacement (46) présentent des bords arrondis.

7. Enrouleur de câble selon au moins l'une des revendications 2 à 6, **caractérisé en ce que** le câble électrique (50) est guidé au moyen d'un chemin de câble (60) dans une direction d'incidence prédéfinie (62) par rapport au corps d'enroulement (12), les barres d'espacement (46) présentant un angle d'inclinaison par rapport au corps d'enroulement (12) correspondant à la direction d'incidence (62) prédéfinie.

8. Enrouleur de câble selon au moins l'une des revendications 1 à 7, **caractérisé en ce que** le corps d'enroulement (12) présente des première et deuxième brides d'enrouleur (26, 28) sur les faces frontales axiales (16, 18) de celui-ci, une ouverture d'alimentation en air (32) en communication avec le dispositif de transport d'air (30) étant réalisée dans au moins l'une des deux brides d'enrouleur (26, 28).

9. Enrouleur de câble selon au moins l'une des revendications 1 à 8, **caractérisé en ce que** le corps d'enroulement (12) est formé soit par une ossature d'enrouleur (36), soit par un corps d'enrouleur fermé doté d'orifices de sortie d'air prévus dans les zones de passage (54).

10. Enrouleur de câble selon au moins l'une des revendications 1 à 9, **caractérisé en ce que** l'enrouleur de câble (12) comprend un chemin de câble (60) qui peut être déplacé axialement au moyen d'un dispositif de réglage (64) pour enrouler et dérouler le câble électrique (50), l'unité de contrôle (72) pilotant l'entraînement d'enroulement (20) en liaison avec le dispositif de réglage (64) de telle sorte que la coordination de la rotation du corps d'enroulement (12) avec le déplacement axial du chemin de câble (60) permet d'enrouler le câble électrique (50) sur le corps d'enroulement (12) de manière orthocyclique.

11. Enrouleur de câble selon la revendication 10, **caractérisé en ce que** le chemin de câble (60) présente un dispositif de capteur (80) pour détecter une déviation latérale du câble électrique (50) de la direction d'enroulement à respecter, dans lequel, lorsqu'une déviation latérale inadmissible du câble électrique (50) est reconnue, l'unité de contrôle (72) provoque un mouvement de correction du chemin de câble (60) par un pilotage du dispositif de réglage (64) ou un déroulement arrière partiel du câble électrique (50) par un pilotage de l'entraînement d'enroulement (20) afin d'éliminer l'enroulement erroné.
